# EUROPÄISCHE PATENTSCHRIFT

(11) **EP 3 510 065 B1**
(45) Veröffentlichungstag und Bekanntmachung des Hinweises auf die Patenterteilung: **21.10.2020**
(21) Anmeldenummer: 17765113.0
(22) Anmeldetag: 31.08.2017
(51) Int. Cl.: C08F 220/14, C08F 2/02, C08J 9/02, C08J 9/04

(54) **EIGENSCHAFTSVERBESSERUNG BEI PMMA-SCHÄUMEN DURCH DEN EINSATZ VON METHACRYLAMIDEN**
IMPROVEMENT OF THE PROPERTIES OF PMMA FOAMS BY THE USE OF METHACRYL AMIDES
AMÉLIORATION DES CARACTERISTIQUES DE MOUSSES PMMA À L'AIDE DE L'UTILISATION DE MÉTHACRYLAMIDES

(30) Priorität: 12.09.2016 EP 16188243
(43) Veröffentlichungstag der Anmeldung: 17.07.2019
(73) Patentinhaber: Evonik Operations GmbH, 45128 Essen (DE)
(72) Erfinder: RICHTER, Thomas, 64293 Darmstadt (DE); SEIPEL, Christoph, 64832 Babenhausen (DE); BERNHARD, Kay, Cheshire, Connecticut 06410 (US)
(74) Vertreter: Evonik Patent Association
(86) Internationale Anmeldenummer: PCT/EP2017/071839
(87) Internationale Veröffentlichungsnummer: WO 2018/046380

(56) Entgegenhaltungen:
- DATABASE WPI Week 200617 Thomson Scientific, London, GB; AN 2006-160083 XP002765895, -& JP 2006 045256 A (SEKISUI CHEM IND CO LTD) 16. Februar 2006 (2006-02-16) in der Anmeldung erwähnt

## Beschreibung

### Gebiet der Erfindung

Die vorliegende Erfindung betrifft neuartige PMMA-Schäume, sowie deren Herstellung. Dabei werden Polymere aufgeschäumt, die unter Copolymerisation von Methacrylamiden, wie z.B. N-Isopropylmethacrylamid und ohne Styrol erhalten wurden. Dabei konnte überraschend festgestellt werden, dass erfindungsgemäß ein stabiler, einfach herzustellender PMMA-Schaum mit sehr guten Eigenschaften, wie einer sehr hohen Druckfestigkeit, erhalten werden kann, der insbesondere im Vergleich zu bekannten PMMA-Schäumen einfacher mit Deckschichten verbunden werden kann.

### Stand der Technik

Polymerhartschaumstoffe sind allgemein bekannt und finden Anwendung in unterschiedlichsten Bereichen wie z.B. als Isolationsmaterial, in Verpackungen sowie im Leichtbau. Speziell im Bereich des Leichtbaus sollten die Schaumstoffe hohe Festigkeiten bei geringer Dichte aufweisen. Verwendung finden hier unter anderem PVC-, PET-, spezielle PU- und P(M)I-(Poly(meth)acrylimid-)Schaumstoffe, die unter anderem als Kernmaterial in Sandwichkompositen Anwendung finden.

PMMA Schaumstoffe sind in der Literatur oft beschrieben, haben aber bis dato wenig bis keine industriellen Bedeutung erlangt. Ein Grund hierfür ist die häufig beschriebene, aber sehr komplizierte Herstellung über Autoklavenverfahren, bei welchen PMMA mit gasförmigen Treibmitteln, wie z.B. CO₂ oder N₂, unter hohen Drücken im Autoklaven beladen und dann bei Druckentspannung expandiert wird.

Sekisui beschreibt in einer Reihe von Anmeldungen die Herstellung von sogenannten "Acrylic Foams" (z.B. JP 48043054, JP 2002003635, JP 2006045256, JP 2012201704, JP 2012201705, JP 2013075935). In diesen Anmeldungen werden jedoch, zusätzlich zu MMA, deutliche Mengen von Styrol und Methacrylamiden als Comonomere beschrieben. Als Treibmittel dient vornehmlich Harnstoff. Harnstoff als Treibmittel kann jedoch zu Problemen aufgrund einer schlechten Löslichkeit in der Monomermischung führen, was wiederum zu Inhomogenität im Schaum führen kann. Ein weiterer Nachteil von Harnstoff als Treibmittel ist, dass dieser durch seine Zersetzung zu CO und NH₃ als Treibmittel wirkt. Das bedeutet, dass die Schäumtemperatur immer oberhalb der Zersetzungstemperatur von Harnstoff liegen muss und so nur eine sehr schlechte Einstellbarkeit der Schäumtemperatur gegeben ist. Weiterhin sind NH₃ und CO toxisch.

In JP 55139433 wird die Herstellung eines Schaumstoffes beschrieben, der als Comonomer zwischen 4 und 35 Gew% Acryl- bzw. Methacrylsäure, sowie Harnstoff und Wasser als Treibmittel enthält. Der hohe Anteil an Säuren führt zu einem sehr eingeschränktem Anwendungsfeld für diesen Schaum, der z.B. nur mit einer sehr geringen Anzahl von Harzen, Composite-Materialien oder Klebern verbunden werden kann.

In US 4,816,492 ist die Herstellung von (Meth)acrylat-basierten Schäumen beschrieben, wobei die Monomermischung in Gegenwart von Treibmitteln polymerisiert wird. Als Treibmittel werden halogenierte Kohlenwasserstoffe verwendet. Das Arbeiten mit halogenierten Kohlenwasserstoffen hat jedoch das Problem, dass diese einen stark negativen Einfluss auf die Ozonschicht haben und damit deutlichen Einschränkungen unterliegen. Außerdem sind die Freiheitsgrade des Schäumungsprozesses eingeschränkt, so dass nur begrenzt und jeweils abhängig von einander die Porengrößen, die Porenverteilung und die Schaumdichte eingestellt werden können. Weiterhin weisen die ausschließlich aus (Meth)acrylaten, Vinylacetat und chlorhaltigen Monomeren hergestellten Schäume keine gute Druckfestigkeit auf.

In EP 0 068 439 ist die Herstellung von PMMA basierten Schäumen durch die Polymerisation von MMA in Gegenwart eines Treibmittels und anschließendes Schäumen offenbart. Hervorzuheben ist hier, dass explizit ein Plastifizierungsmittel, insbesondere Methacrylsäureester mit mindestens drei Kohlenstoffatomen in der Alkylgruppe, in Mengen zwischen 5 und 40 Gewichtsteilen bezogen auf MMA eingesetzt werden, um Schäume zu erhalten. Als Treibmittel werden Kohlenwasserstoffe und/oder Fluorkohlenwasserstoffe angegeben. Ziel ist es, Schaumstoffe herzustellen, die große Poren von z.B. etwa 5 mm Durchmesser haben und somit die Transparenz des Basispolymers im Unterschied zu feinporigeren Schäumen erhalten bleibt. Die längerkettigen Alkylreste haben jedoch eine weichmachende Wirkung auf das Matrixpolymer, welches insbesondere für Hartschaumanwendungen aus mechanischen Gründen nicht gewünscht wird. Weiterhin werden auch halogenierte Kohlenwasserstoffe als Treibmittel beschrieben. Auch ist die Lehre der EP 0 068 439 nur auf sehr große Zellen in der Schaummatrix beschränkt.

Allen diesen auf PMMA basierenden Schäumen ist jedoch gemeinsam, dass sie für die Verwendung in Composite-Materialien, wie insbesondere Sandwich-Konstruktionen, eine zu geringe Druckfestigkeit aufweisen. Für Anwendungen als Kernmaterial in Sandwich Kompositen sind die mechanischen Eigenschaften, vor allem die Druckfestigkeit, von hoher Bedeutung, da diese Einfluss auf die Fertigungsprozesse der Sandwichelemente sowie die mechanischen Eigenschaften der Sandwichelemente haben.

Weiterhin haben diese Schäume oft den Nachteil nur sehr eingeschränkt mit Deckschichten mittels Kleben oder durch Verschweißen mit dem Matrixmaterial der Deckschicht verbunden werden zu können.

### Aufgabe

Aufgabe der vorliegenden Erfindung war es damit, ein neues Verfahren zur Herstellung von PMMA-Schäumen zur Verfügung zu stellen, das die diskutierten Nachteile des Standes der Technik nicht aufweist.

Insbesondere war es dazu Aufgabe der vorliegenden Erfindung, eine PMMA-Rezeptur zur Verfügung zu stellen, die einerseits gut aufzuschäumen ist und dabei hohe Freiheitsgrade bzgl. der Einstellung der Porengröße, der Porenverteilung und der Schaumdichte zulässt. Andererseits soll das Material als Schaum mechanisch sehr belastbar sein. Dabei soll der Schaum vor allem eine sehr hohe Druckfestigkeit aufweisen.

Darüber hinaus ergaben sich insbesondere die Aufgaben, eine geeignete PMMA-Rezeptur zur Verfügung zu stellen, die als Schaum gut und einfach mittels Verkleben, Verschmelzen oder durch Harzaushärtung auf den Oberfläche mit einem zweiten Material, z.B. in Form einer Deckschicht, verbunden werden kann. Dazu ist es darüber hinaus wichtig, dass die erhaltenen PMMA-Schäume eine Verträglichkeit gegenüber den verwendeten Harzsystemen oder Klebstoffen zur Herstellung der Sandwichelemente besitzen.

Weiterhin lag der Erfindung die Aufgabe zugrunde, dabei optional PMMA-Schäume zur Verfügung zu stellen, die einen Schäumungsfaktor von mindestens 2 und damit eine Dichte zwischen 50 und 350 kg/m³ aufweisen.

Weitere nicht explizit genannte Aufgaben können sich aus dem Gesamtzusammenhang der Erfindung, den Ansprüchen, der Beschreibung oder den Beispielen ergeben.

### Lösung

Gelöst werden die Aufgaben durch ein neuartiges Verfahren zur Herstellung von PMMA-Schaumstoffen, bei dem die Herstellung der Schaumstoffe durch eine Polymerisation, wie zum Beispiel eine Plattenpolymerisation von Monomermischungen, enthaltend zu einem relevanten Anteil MMA, bzw. eines Sirups aus einem zu einem relevanten Anteil aus MMA bestehenden Polymer und einer zu einem relevanten Anteil aus MMA zusammengesetzten Monomermischung bevorzugt in Gegenwart eines bei Polymerisationsbedingungen nicht-gasförmigen Treibmittels und/oder eines copolymerisierbaren Treibmittels erfolgen. In einem zweiten Schritt wird die so erhaltene, auspolymerisierte und optional auch nachträglich mit Treibmittel beladene PMMA Platte dann durch Erwärmung aufgeschäumt.
Dabei wurde erfindungsgemäß überraschend gefunden, dass der Einsatz geringer Mengen Methacrylamid, N-Alkylmethacrylamid und/oder N,N-di-Alkylmethacrylamid als Comonomere eine deutliche Verbesserung der mechanischen Eigenschaften der so erhaltenen Schäume bewirkt. In Bezug auf die spätere Verbindung mit z.B. Deckschichten zu Sandwichbauteilen oder anderen Verbundwerkstoffen konnte gleichsam überraschend gefunden werden, dass die erfindungsgemäßen auf PMMA basierenden Schäume eine gegenüber dem Stand der Technik bessere Weiterverarbeitbarkeit in Bezug auf Verkleben, Verschweißen oder oberflächliche Harzaushärtung mit sich bringen. Dies ergibt sich insbesondere dann, wenn die erfindungsgemäßen Schäume im Vergleich zum Stand der Technik zwar (Alkyl)methacrylamide, jedoch weder Styrol noch Maleinsäurederivate aufweisen. Gemäß Stand der Technik mussten diese drei Komponenten jedoch, wenn eingesetzt, miteinander zwingend kombiniert werden. Styrol-haltige PMMA-Schäume erwiesen sich zwar als mechanisch sehr stabil, der Styrol-Anteil führte auf der anderen Seite aber zu Unverträglichkeiten der Schäume mit bestimmten Harzen. Daher ist der erfindungsgemäß hergestellte Schaum bevorzugt -jedoch nicht zwingend - frei von Styrol und Maleinsäurederivaten.
Das erfindungsgemäße Verfahren zur Herstellung eines Polymethacrylat-Schaumstoffs zeichnet sich dadurch aus, dass eine Zusammensetzung, enthaltend 0,2 bis 2,0 Gew%, bevorzugt 0,5 bis 1,5 Gew% eines Initiators, 0 bis 20 Gew%, bevorzugt 0 bis 15 Gew% eines nicht polymerisierbaren Treibmittels, 0 bis 5 Gew%, bevorzugt bis 1 Gew% eines Reglers und 70 bis 99,8 Gew%, bevorzugt 75 bis 98,49 Gew% einer Monomermischung bei einer Temperatur zwischen 20 °C und 100 °C polymerisiert und anschließend zwischen 130 °C und 250 °C geschäumt wird.
Erfindungsgemäß entscheidend ist dabei die Zusammensetzung der Monomermischung. Diese besteht aus 70 bis 95 Gew%, bevorzugt 75 bis 95 Gew% MMA, 0,1 bis 5 Gew%, bevorzugt 0,5 bis 2,5 Gew% Alkylacrylaten mit 1 bis 12 C-Atomen im Alkylrest, 0 bis 10 Gew%, bevorzugt 0 bis 5 Gew% Alkylmethacrylaten mit 2 bis 12 C-Atomen im Alkylrest, 0,5 bis 10 Gew%, bevorzugt 1 bis 8 Gew% Methacrylamiden, N-Alkylmethacrylamiden und/oder N-,N-di-Alkylmethacrylamiden, 0 bis 10 Gew%, bevorzugt bis 5 Gew% Vernetzer, 0 bis 10 Gew%, bevorzugt bis 8 Gew% Acryl-, Methacryl- und/oder Itaconsäure und 0 bis 10 Gew% eines hydroxyfunktionellen Alkyl(meth)acrylats, wobei die ganze oder ein Teil der Monomermischung am Anfang der Polyermisation zu bis zu 80 Gew%, bevorzugt bis 50 Gew% als Polymer und/oder Oligomer vorliegen kann.
Die Zusammensetzung kann auch weitere Komponenten enthalten. Beispiele für diese weiteren Komponenten sind insbesondere UV-Stabilisatoren, Füllstoffe, Verträglichkeitsverbesserer, Nukleierungsmittel, Trennmittel und Pigmente.

Sollten Oligomere oder Polymere eingesetzt werden, spricht man von einer so genannten Sirup-Polymerisation, die sich insbesondere bei einem Gussverfahren zwischen zwei Platten bewährt hat. Bei einer solchen Sirup-Polymerisation können am Ende auch zwei verschieden zusammengesetzte PMMA-Typen als Mischung im Schaum nebeneinander vorliegen, ohne dass dies die Schäumung relevant beeinflussen würde.
Alternativ können aber auch andere Polymerisationsverfahren, bis hin zur Lösungs- bzw. Suspensionspolymerisation zum Einsatz kommen. Für letztere müssen dann zwischenzeitlich entsprechende Filtrations- bzw. Trocknungsschritte erfolgen. Die Polymerisation, insbesondere in Substanz erfolgt bevorzugt bei einer Temperatur zwischen 20 °C und 100 °C, bevorzugt zwischen 30 °C und 70 °C.
Das Schäumen erfolgt bevorzugt - in Abhängigkeit von den eingesetzten Treibmitteln - bei einer Temperatur zwischen 130 °C und 250 °C, bevorzugt zwischen 150 °C und 230 °C.
Bevorzugt erfolgen die Polymerisation und/oder die Schäumung stufenweise bei unterschiedlichen Temperaturen. Alternativ oder zusätzlich ist es möglich, dass die Polymerisation und das Schäumen zumindest teilweise simultan erfolgen.

Bevorzugt enthält die Monomermischung N-Alkylmethacrylamide mit ein bis 12 Kohlenstoffatomen in der Alkylgruppe und kein Methacrylamid oder N-,N-di-Alkylmethacrylamide. Besonders bevorzugt handelt es sich bei dem N-Alkylmethacrylamid um N-Methylolmethacrylamid, 2-Hydroxypropylmethacrylamid oder N-Isopropylmetacrylamid, insbesondere bevorzugt um N-Isopropylmetacrylamid.
Bei den vorhandenen Alkylacrylaten handelt es sich bevorzugt um Alkylacrylate mit 1 bis 8 C-Atomen im Alkylrest, besonders bevorzugt um Ethylacrylat, n-Propylacrylat oder n-Butylacrylat. Die Acrylate erhöhen als Wiederholungseinheiten im Polymer vor allem dessen thermische Stabilität. Alternativ oder zusätzlich können vor allem auch tert-Butylacrylat oder iso-Propylacrylat als Comonomere eingesetzt werden. Dabei handelt es sich um copolymerisierbare Treibmittel, die unter den Schäumungsbedingungen eine Acrylsäure-Wiederholungseinheit in der Polymerkette bilden und gleichzeitig Propen oder iso-Buten freisetzen. Solche copolymerisierbaren Treibmittel können als einzige Treibmittel vorliegen oder mit nicht copolymerisierbaren Treibmitteln der Zusammensetzung kombiniert werden.
Als die neben MMA optionalen weiteren Alkylmetharcylate sind insbesondere solche mit 2 bis 8 C-Atomen im Alkylrest bevorzugt. Besonders bevorzugt sind dabei Ethylmethacrylat, n-Propylmethacrylat, n-Butylmethacrylat oder 2-Ethyl-hexylmethacrylat. Alternativ oder zusätzlich können vor allem auch tert-Butylmethacrylat oder iso-Propylmethacrylat als Comonomere eingesetzt werden. Auch bei diesen beiden Alternativen handelt es sich um copolymerisierbare Treibmittel, die am Ende Methacrylsäure-Wiederholungseinheiten bilden.

In besonders bevorzugten, eher kleine und sehr gleichmäßige Poren bildenden Ausführungsform handelt es sich es sich bei den Alkylmethacrylaten ganz oder teilweise um tert-Butylmethacrylat und/oder iso-Propylmethacrylat handelt, und/oder dass es sich bei den Alkylacrylaten ganz oder teilweise um tert-Butylacrylat und/oder iso-Propylacrylat. Insbesondere bevorzugt enthält die Monomermischung dabei zwischen 5 und 10 Gew% tert-Butylmethacrylat, iso-Propylmethacrylat, tert-Butylacrylat und/oder iso-Propylacrylat, wobei der Anteil an tert-Butylacrylat und iso-Propylacrylat maximal 5 Gew% beträgt. Sehr gute Ergebnisse werden in Bezug auf die Porengröße und -form erzielt, wenn die Zusammensetzung dabei kein nicht copolymeriserbares Treibmittel aufweist.

Bei den optional vorliegenden Vernetzern handelt es sich bevorzugt um ein di-, tri- oder tetra-(Meth)acrylat, um Allyl(meth)acrylat, um Triallylcyanurat, um Triallylisocyanurat oder um eine Mischung, enthaltend mindestens zwei dieser Vernetzer.
Bei den gleichfalls optional vorliegenden hydroxyfunktionellen Alkyl(meth)acrylats handelt es sich bevorzugt um 2-Hydroxyethyl-(meth)acrylat oder um 3-Hydroxypropyl-(meth)acrylat. Bevorzugt liegen keine freien Hydroxy- und Säuregruppen zur gleichen Zeit in der Monomermischung vor.
Bei den optional in der Zusammensetzung vorliegenden Reglern handelt es sich bevorzugt um eine Verbindung mit ein bis fünf Mercaptangruppen, um ein γ-Terpinen oder um eine Mischung aus mindestens zwei dieser Regler. Besonders bevorzugt handelt es sich bei dem Regler um Pentaerithrit-tetra-thioglycolat, 2-Mercaptoethanol, ein Alkylmercaptan mit 2 bis 12 Kohlenstoffatomen, Thioglykolsäure, ein Thioglycolat, γ-Terpinen oder eine Mischung aus mindestens zwei dieser Regler.

Die erfindungsgemäß hergestellten PMMA-Schaumstoffe weisen eine überraschend hohe Festigkeit und gleichzeitig eine überraschend geringe Sprödigkeit auf und können daher z.B. Anwendung im Leichtbau finden. Weiterhin auf Grund der guten Materialeigenschaften auf den Einsatz von Weichmachern, wie z.B. längerkettigen Alkyl(meth)acrylaten oder Phthalaten, die sich nach bisherigen Erkenntnissen positiv auf die Fließfähigkeit bzw. die Schäumbarkeit auswirken, jedoch gleichzeitig die mechanischen Eigenschaften des PMMA-Schaumstoffes, insbesondere die Festigkeit, negativ beeinflussen, verzichtet werden.
Bei den insbesondere geeigneten, nicht copolymerisierbaren Treibmitteln handelt es sich um tert-Butanol, n-Heptan, MTBE, Methylethylketon, einen anderen Alkohol mit ein bis vier Kohlenstoffatomen, Wasser, Methylal, Harnstoff und/oder tert-Butylmethylether.
Die Polymerisation erfolgt bevorzugt in einem formgebenden Gefäß, insbesondere in Form einer Kammerpolymerisation zwischen zwei Platten, wie z.B. Glasplatten. Dabei kann es sich beispielswiese im einfachsten Fall um eine rechteckige Wanne handeln. Durch die Polymerisation in einer solchen Wanne erhält man später eine Platte, deren Dicke durch den Füllstand der Wanne bzw. den Plattenabstand bestimmt wurde. Darüber hinaus sind jedoch auch komplexere Formen als Gefäß denkbar. Bevorzugt erfolgt die Polymerisation bei einer Temperatur zwischen 30 und 70 °C. Dabei können als Initiatoren neben allgemein bekannten Radikalstartern, wie zum Beispiel Peroxide oder Azoinitiatoren, auch Redoxsysteme oder UV-Initiatoren eingesetzt werden. Dabei betreffen die Polymerisationstemperaturen unterhalb von 40 °C insbesondere diese RedoxSysteme und UV-Initiatoren. Die UV-Initiatoren werden durch Bestrahlung mit entsprechenden UV-Licht initiiert, während es sich bei den Redox-Initatoren um Zweikomponentensysteme handelt, deren Initiierung durch Mischen der beiden Komponenten und der Monomere erfolgt.

Das Schäumen kann anschließend in dem gleichen Gefäß erfolgen, wobei die Volumenzunahme in diesem Fall auf eine Richtung, die offene Seite des Gefäßes beschränkt wird. Das polymerisierte Material kann jedoch auch freiliegend oder hängend aufgeschäumt werden. Bevorzugt erfolgt das Schäumen in einem Ofen. Alternativ ist es auch möglich, das Schäumen durch Bestrahlung mit IR-Strahlung, insbesondere mit einer Wellenlänge zwischen 0,78 und 2,20, bevorzugt zwischen 1,20 und 1,40 µm, zu bewirken. Eine weitere Alternative stellt das Aufschäumen mit Mikrowellen dar. Auch die Kombination aus verschiedenen Methoden, wie IR-Strahlung, Mikrowellen und/oder Heizen in einem Ofen ist denkbar.

Sowohl das Schäumen als auch die zuvor erfolgte Polymerisation können jeweils, wie erwähnt in mehreren Temperaturstufen erfolgen. Bei der Polymerisation kann durch eine spätere Erhöhung der Temperatur zusätzlich der Umsatz gesteigert und der Restmonomergehalt damit verringert werden. Beim Schäumen kann durch eine stufenweise Erhöhung der Schäumungstemperatur die Porenverteilung, die Porengröße und die Anzahl der Poren beeinflusst werden.

Optional kann das Verfahren, wie bereits ausgeführt, auch derart durchgeführt werden, dass die Polymerisation nur unvollständig, in diesem Fall bevorzugt zu einem Umsatz von mindestens 80% durchgeführt wird und die endgültige Auspolymerisation beim Schäumen erfolgt. Ein solches Verfahren hat den Vorteil, dass zu Beginn des Schaumvorgangs die verbliebenen Monomere einen weichmachenden Effekt haben, ohne dass im fertigen Schaumstoff eine weichmachende Verbindung verbleiben würde. Somit würde bei einer solchen Ausführungsform die Polymerisation und das Schäumen teilweise - bei einer Schäumungstemperatur - simultan erfolgen.

Neben dem erfindungsgemäßen Verfahren sind auch PMMA-Schaumstoffe, die über ein solches Verfahren beispielsweise herstellbar sind, Bestandteil der vorliegenden Erfindung. Ein solcher PMMA-Schaumstoff ist dabei dadurch gekennzeichnet, dass der Feststoffanteil dieses Schaums zu mindestens 95 Gew% aus einem Polymer, hergestellt aus einer Monomermischung, bestehend aus 70 bis 95 Gew% MMA, 0,1 bis 5 Gew% Alkylacrylaten mit 1 bis 12 C-Atomen im Alkylrest, 0 bis 10 Gew% Alkylmethacrylaten mit 2 bis 12 C-Atomen im Alkylrest, 0,5 bis 10 Gew% Methacrylamiden, N-Alkylmethacrylamiden und/oder N-,N-di-Alkylmethacrylamiden, 0 bis 10 Gew% Vernetzer, 0 bis 10 Gew% Acryl-, Methacryl- und/oder Itaconsäure und 0 bis 10 Gew% eines hydroxyfunktionellen Alkyl(meth)acrylats Besteht. Dabei weist der Schaum bevorzugt eine Dichte zwischen 50 und 350 kg/m³, besonders bevorzugt zwischen 75 und 250 kg/m³ auf.

Die erfindungsgemäß hergestellten PMMA-Schaumstoffe sowie die erfindungsgemäßen PMMA-Schaumstoffe können vielfältig Verwendung finden. Beispiele für solche Verwendungen sind witterungsbeständige Isolationsmaterialien, Kernmaterial für Sandwich Composites, im Leichtbau, als Verpackungsmaterial, als Energieabsorber in Crashelementen, in architektonischen Bauelementen, als Diffusor in lichttechnischen Anwendungen, im Möbelbau, im Bootsbau, im Fahrzeugbau, in der Luftfahrtindustrie oder im Modellbau.

### Beispiele

### Allgemeine Vorschrift zur Herstellung eines PMMA-Schaums

Die einzelnen Komponenten der Rezeptur (spezifische Zusammensetzungen siehe in den folgenden Tabellen) wurden nacheinander eingewogen und anschließend ungefähr 20 min mit Hilfe eines Rührmotos und gegebenenfalls unter Verwendung eines Ultraturrax durchmischt, sodass eine homogene Mischung erhalten wurde.
Die Polymerisation der Mischung erfolgte in einer Kammer, welche aus zwei Glasplatten der Größe 300 x 400mm und einer Randabdichtung bestanden. Die Kammer wurde anschließend in einem Wasserbad erhitzt und dabei der Inhalt polymerisiert. Anschließend wurde getempert.
Nach abgeschlossener Polymerisation und Temperung wurde mit den in den in den Tabellen spezifisch angegebenen Parametern geschäumt.

Bei Rewopol SB-DO 75 handelt es sich um ein Trennmittel, das zur besseren Trennung des polymerisierten PMMA's von den eingesetzten Glasplatten zugegeben wird. Diese Komponente hat keinen Einfluss auf die Schaumherstellung und wird hier nur für die spezifischen Beispiele zur Erleichterung des Verfahrens eingesetzt.
Aerosil OX50 wird als Nukleierungsmittel zugegeben. Damit erhält man eine größere Zahl, kleinerer Poren. Jedoch haben auch Schäume, die ohne Einsatz eines Nukleierungsmittels hergestellt wurden sehr gute Eigenschaften, so dass auch die Verwendung dieser Komponente nicht als Einschränkung der Erfindung zu verstehen ist.
Pentaerythrittetrathioglycolat ist ein Regler, 2,2'-Azobis-(2,4-dimethylvaleronitril) ein Initiator.

### Beispiel 1

**Tabelle 1: Zusammensetzung und Schäumungsbedingungen Beispiel 1**

| Stoff | Einwaage [g] | Zusammensetzung [Gew%] |
|---|---|---|
| PMMA in MMA gelöst (20 Gew%) | 1114,75 | 85,75 |
| tert-Butylmethacrylat | 91,00 | 7,0 |
| n-Butylacrylat | 13 | 1 |
| Glycoldimethacrylat | 0,78 | 0,06 |
| N-Isopropylmethacrylamid | 26 | 2 |
| 2,2'-Azobis-(2,4-dimethylvaleronitril) | 0,65 | 0,05 |
| Pentaerythrittetrathioglycolat | 0,52 | 0,04 |
| Rewopol SB-DO 75 | 1,3 | 0,1 |
| Aerosil OX50 | 52 | 4 |
| Summe | 1300 | 100 |
| Plattendicke | 10 mm | |
| Glasformat | 400 x 300 mm | |
| Polymerisation | 24 Stunden bei 42 °C | |
| Temperung | 4 Stunden bei 115 °C | |
| Schäumung | 1 Stunde bei 215 °C im Umluftofen | |
| Druckfestigkeit | 2,7 MPa (Dichte 125 kg/m³) | |

### Beispiel 2:

**Tabelle 2: Zusammensetzung und Schäumungsbedingungen Beispiel 2**

| Stoff | Einwaage [g] | Zusammensetzung [Gew%] |
|---|---|---|
| PMMA in MMA gelöst (20 Gew%) | 1075,75 | 82,75 |
| tert-Butylmethacrylat | 91,00 | 7,0 |
| n-Butylacrylat | 13 | 1 |
| Glycoldimethacrylat | 0,78 | 0,06 |
| N-Isopropylmethacrylamid | 65 | 5 |
| 2,2'-Azobis-(2,4-dimethylvaleronitril) | 0,65 | 0,05 |
| Pentaerythrittetrathioglycolat | 0,52 | 0,04 |
| Rewopol SB-DO 75 | 1,3 | 0,1 |
| Aerosil OX50 | 52 | 4 |
| Summe | 1300 | 100 |
| Plattendicke | 10 mm | |
| Glasformat | 400 x 300 mm | |
| Polymerisation | 24 Stunden bei 42 °C | |
| Temperung | 4 Stunden bei 115 °C | |
| Schäumung | 1 Stunde bei 215 °C im Umluftofen | |
| Druckfestigkeit | 2,8 MPa (Dichte 130 kg/m³) | |

### Beispiel 3:

**Tabelle 3: Zusammensetzung und Schäumungsbedingungen Beispiel 3**

| Stoff | Einwaage [g] | Zusammensetzung [Gew%] |
|---|---|---|
| PMMA in MMA gelöst (20 Gew%) | 1075,75 | 82,75 |
| tert-Butylmethacrylat | 91,00 | 7,0 |
| n-Butylacrylat | 13 | 1 |
| Glycoldimethacrylat | 0,78 | 0,06 |
| N-Isopropylmethacrylamid | 65 | 5 |
| 2,2'-Azobis-(2,4-dimethylvaleronitril) | 0,65 | 0,05 |
| Pentaerythrittetrathioglycolat | 1,04 | 0,08 |
| Rewopol SB-DO 75 | 1,3 | 0,1 |
| Aerosil OX50 | 52 | 4 |
| Summe | 1300 | 100 |
| Plattendicke | 10 mm | |
| Glasformat | 400 x 300 mm | |
| Polymerisation | 24 Stunden bei 42 °C | |
| Temperung | 4 Stunden bei 115 °C | |
| Schäumung | 35 min bei 230 °C | |
| Druckfestigkeit | 0,84 MPa (Dichte 80 kg/m³) | |

### Beispiel 4:

**Tabelle 4: Zusammensetzung und Schäumungsbedingungen Beispiel 4**

| Stoff | Einwaage [g] | Zusammensetzung [Gew%] |
|---|---|---|
| PMMA in MMA gelöst (20 Gew%) | 1075,71 | 82,75 |
| tert-Butylmethacrylat | 91,00 | 7,0 |
| n-Butylacrylat | 13 | 1 |
| Glycoldimethacrylat | 0,78 | 0,06 |
| N-Isopropylmethacrylamid | 65 | 5 |
| 2,2'-Azobis-(2,4-dimethylvaleronitril) | 0,65 | 0,05 |
| Pentaerythrittetrathioglycolat | 1,56 | 0,12 |
| Rewopol SB-DO 75 | 1,3 | 0,1 |
| Aerosil OX50 | 52 | 4 |
| Summe | 1300 | 100 |
| Plattendicke | 10 mm | |
| Glasformat | 400 x 300 mm | |
| Polymerisation | 24 Stunden bei 42 °C | |
| Temperung | 4 Stunden bei 115 °C | |
| Schäumung | Heissluft Mikrowellenherd (Sharp), 200 °C, Mikrowelle Stufe 1 | |
| Druckfestigkeit | 0,5 MPa (Dichte 57 kg/m³) | |

### Beispiel 5:

**Tabelle 5: Zusammensetzung und Schäumungsbedingungen Beispiel 5**

| Stoff | Einwaage [g] | Zusammensetzung [Gew%] |
|---|---|---|
| PMMA in MMA gelöst (20 Gew%) | 1101,75 | 84,75 |
| tert-Butylmethacrylat | 65,00 | 5,00 |
| n-Butylacrylat | 13 | 1,00 |
| Glycoldimethacrylat | 0,78 | 0,06 |
| N-Isopropylmethacrylamid | 65 | 5 |
| 2,2'-Azobis-(2,4-dimethylvaleronitril) | 0,65 | 0,05 |
| Pentaerythrittetrathioglycolat | 0,52 | 0,04 |
| Rewopol SB-DO 75 | 1,3 | 0,1 |
| Aerosil OX50 | 52,00 | 4 |
| Summe | 1300 | 100 |
| Plattendicke | 10 mm | |
| Glasformat | 400 x 300 mm | |
| Polymerisation | 24 Stunden bei 40 °C | |
| Temperung | 4 Stunden bei 115 °C | |
| Schäumung | 60min bei 215°C | |
| Druckfestigkeit | 9,3 MPa (Dichte 300 kg/m³) | |

### Vergleichsbeispiel 1:

**Tabelle 6: Zusammensetzung und Schäumungsbedingungen Vergleichsbeispiel 1**

| Stoff | Einwaage [g] | Zusammensetzung [Gew%] |
|---|---|---|
| PMMA in MMA gelöst (20 Gew%) | 1406,25 | 93,75 |
| tert-Butylmethacrylat | 75,00 | 5,00 |
| n-Butylacrylat | 15 | 1 |
| Glycoldimethacrylat | 0,90 | 0,06 |
| 2,2'-Azobis-(2,4-dimethylvaleronitril) | 0,75 | 0,05 |
| Pentaerythrittetrathioglycolat | 0,60 | 0,04 |
| Rewopol SB-DO 75 | 1,50 | 0,10 |
| Summe | 1500,00 | 100,00 |
| Plattendicke | 10 mm | |
| Glasformat | 400 x 300 mm | |
| Polymerisation | 24 Stunden bei 42 °C | |
| Temperung | 4 Stunden bei 115 °C | |
| Schäumung | 1h bei 215 °C | |
| Druckfestigkeit | 1,25 MPa (Dichte 112 kg/m³) | |

### Vergleichsbeispiel 2:

**Tabelle 7: Zusammensetzung und Schäumungsbedingungen Vergleichsbeispiel 2**

| Stoff | Einwaage [g] | Zusammensetzung [Gew%] |
|---|---|---|
| PMMA in MMA gelöst (20 Gew%) | 1140,75 | 87,75 |
| tert -Butyl methylether | 91,00 | 7,00 |
| n-Butylacrylat | 13,00 | 1,00 |
| Glycoldimethacrylat | 0,78 | 0,06 |
| 2,2'-Azobis-(2,4-dimethylvaleronitril) | 0,65 | 0,05 |
| Pentaerythrittetrathioglycolat | 0,52 | 0,04 |
| Rewopol SB-DO 75 | 1,30 | 0,10 |
| Aerosil OX50 | 52,00 | 4,00 |
| Summe | 1300,00 | 100,00 |
| Plattendicke | 10 mm | |
| Glasformat | 400 x 300 mm | |
| Polymerisation | 24 Stunden bei 42 °C | |
| Temperung | 4 Stunden bei 115 °C | |
| Schäumung | 20min bei 215 °C | |
| Druckfestigkeit | 0,7 MPa (Dichte 90 kg/m³) | |

### Vergleichsbeispiel 3:

**Tabelle 8: Zusammensetzung und Schäumungsbedingungen Vergleichsbeispiel 3**

| Stoff | Einwaage [g] | Zusammensetzung [Gew%] |
|---|---|---|
| PMMA in MMA gelöst (20 Gew%) | 1140,75 | 87,75 |
| tert -Butyl methylether | 91,00 | 7,00 |
| n-Butylacrylat | 13,00 | 1,00 |
| Glycoldimethacrylat | 0,78 | 0,06 |
| 2,2'-Azobis-(2,4-dimethylvaleronitril) | 0,65 | 0,05 |
| Pentaerythrittetrathioglycolat | 0,52 | 0,04 |
| Rewopol SB-DO 75 | 1,30 | 0,10 |
| AerosilOX50 | 52,00 | 4,00 |
| Summe | 1300,00 | 100,00 |
| Plattendicke | 10 mm | |
| Glasformat | 400 x 300 mm | |
| Polymerisation | 24 Stunden bei 42 °C | |
| Temperung | 4 Stunden bei 115 °C | |
| Schäumung | 30 min bei 230 °C | |
| Druckfestigkeit | 0,35 MPa (Dichte 61 kg/m³) | |

### Vergleichsbeispiel 4:

**Tabelle 9: Zusammensetzung und Schäumungsbedingungen Vergleichsbeispiel 4**

| Stoff | Einwaage [g] | Zusammensetzung [Gew%] |
|---|---|---|
| PMMA in MMA gelöst (20 Gew%) | 1404,00 | 87,75 |
| tert-Butylmethacrylat | 80,00 | 5,00 |
| n-Butylacrylat | 16,00 | 1,00 |
| Glycoldimethacrylat | 0,96 | 0,06 |
| 2,2'-Azobis-(2,4-dimethylvaleronitril) | 0,80 | 0,05 |
| Pentaerythrittetrathioglycolat | 0,64 | 0,04 |
| Rewopol SB-DO 75 | 1,60 | 0,10 |
| Aerosil OX50 | 96,00 | 6,00 |
| Summe | 1600,00 | 100,00 |
| Plattendicke | 10 mm | |
| Glasformat | 400 x 300 mm | |
| Polymerisation | 24 Stunden bei 42 °C | |
| Temperung | 4 Stunden bei 115 °C | |
| Schäumung | Bestrahlung mit IR-Heizstrahlern bis zur gewünschten Dichte | |
| Druckfestigkeit | 1,38 MPa (Dichte 140 kg/m³) | |

### Ergebnisse

**Tabelle 10: Vergleich der mechanischen Eigenschaften**

| | **Dichte** [kg/m³] | **Druckfestigkeit** [MPa] |
|---|---|---|
| Beispiel1 | 125 | 2,7 |
| Beispiel2 | 130 | 2,8 |
| Beispiel3 | 80 | 0,84 |
| Beispiel4 | 57 | 0,5 |
| Beispiel5 | 300 | 9,3 |
| Vergleichsbeispiel1 | 112 | 1,25 |
| Vergleichsbeispiel2 | 90 | 0,7 |
| Vergleichsbeispiel3 | 61 | 0,35 |
| Vergleichsbeispiel4 | 140 | 1,38 |

Die Vergleichsbeispiele wurden ohne Zugabe eines (Alkyl)methacrylamids zur Monomermischung hergestellt. Anhand der Ergebnisse in Tabelle 10 kann man unter der Berücksichtigung der jeweiligen Dichte eindrucksvoll erkennen, welchen überraschenden positiven Effekt diese Monomerkomponente auf die Druckfestigkeit des späteren Schaums hat.

## Patentansprüche

1. Verfahren zur Herstellung eines Polymethacrylat-Schaumstoffs, **dadurch gekennzeichnet, dass** eine Zusammensetzung, enthaltend 0,2 bis 2,0 Gew% eines Initiators, 0 bis 20 Gew% eines nicht polymerisierbaren Treibmittels, 0 bis 5 Gew% eines Reglers und 70 bis 99,8 Gew% einer Monomermischung, bestehend aus 70 bis 95 Gew% MMA, 0,1 bis 5 Gew% Alkylacrylaten mit 1 bis 12 C-Atomen im Alkylrest, 0 bis 10 Gew% Alkylmethacrylaten mit 2 bis 12 C-Atomen im Alkylrest, 0,5 bis 10 Gew% Methacrylamiden, N-Alkylmethacrylamiden und/oder N-,N-di-Alkylmethacrylamiden, 0 bis 10 Gew% Vernetzer, 0 bis 10 Gew% Acryl-, Methacryl- und/oder Itaconsäure und 0 bis 10 Gew% eines hydroxyfunktionellen Alkyl(meth)acrylats, wobei die ganze oder ein Teil der Monomermischung am Anfang der Polymerisation zu bis zu 80 Gew% als Polymer und/oder Oligomer vorliegen kann, bei einer Temperatur zwischen 20 °C und 100 °C polymerisiert und anschließend zwischen 130 °C und 250 °C geschäumt wird.

2. Verfahren gemäß Anspruch 1, **dadurch gekennzeichnet, dass** die Polymerisation bei einer Temperatur zwischen 30 °C und 70 °C und das Schäumen bei einer Temperatur zwischen 150 °C und 230 °C erfolgen.

3. Verfahren gemäß mindestens einem der Ansprüche 1 oder 2, **dadurch gekennzeichnet, dass** es sich bei dem Vernetzer um ein di-, tri- oder tetra-(Meth)acrylat, um Allyl(meth)acrylat, um Triallylcyanurat, um Triallylisocyanurat oder um eine Mischung, enthaltend mindestens zwei dieser Vernetzer, handelt.

4. Verfahren gemäß mindestens einem der Ansprüche 1 bis 3, **dadurch gekennzeichnet, dass** es sich bei den Alkylmethacrylaten ganz oder teilweise um tert-Butylmethacrylat und/oder iso-Propylmethacrylat handelt, und/oder dass es sich bei den Alkylacrylaten ganz oder teilweise um tert-Butylacrylat und/oder iso-Propylacrylat handelt.

5. Verfahren gemäß Anspruch 4, **dadurch gekennzeichnet, dass** die Monomermischung zwischen 5 und 10 Gew% tert-Butylmethacrylat, iso-Propylmethacrylat, tert-Butylacrylat und/oder iso-Propylacrylat enthält, wobei der Anteil an tert-Butylacrylat und iso-Propylacrylat maximal 5 Gew% beträgt, und dass die Zusammensetzung kein nicht copolymeriserbares Treibmittel aufweist.

6. Verfahren gemäß Anspruch 1, **dadurch gekennzeichnet, dass** die Zusammensetzung 0,5 bis 1,5 Gew% des Initiators, 0 bis 15 Gew% eines nicht polymerisierbaren Treibmittels, 0 bis 1 Gew% Regler und 75 bis 98,49 Gew% der Monomermischung enthält, wobei die Monomermischung zusammengesetzt ist aus 75 bis 95 Gew% MMA, 0,5 bis 2,5 Gew% Alkylacrylaten mit 1 bis 8 C-Atomen im Alkylrest, 0 bis 5 Gew% Alkylmetharcylaten mit 2 bis 8 C-Atomen im Alkylrest, 1 bis 8 Gew% Methacrylamiden, N-Alkylmethacrylamiden und/oder N-,N-di-Alkylmethacrylamiden, 0 bis 5 Gew% di- oder tri-Methacrylat, und 0 bis 8 Gew% Acryl-, Methacryl- und/oder Itaconsäure, und zu 0 bis 50 Gew% als Polymer und/oder Oligomer vorliegt.

7. Verfahren gemäß mindestens einem der Ansprüche 1 bis 6, **dadurch gekennzeichnet, dass** die Monomermischung N-Alkylmethacrylamide mit ein bis 12 Kohlenstoffatomen in der Alkylgruppe und kein Methacrylamid oder N-,N-di-Alkylmethacrylamide aufweist.

8. Verfahren gemäß Anspruch 7, **dadurch gekennzeichnet, dass** es sich bei dem N-Alkylmethacrylamid um N-Methylolmethacrylamid, 2-Hydroxypropylmethacrylamid oder N-Isopropylmetacrylamid handelt.

9. Verfahren gemäß mindestens einem der Ansprüche 1 bis 8, **dadurch gekennzeichnet, dass** die Polymerisation und/oder die Schäumung stufenweise bei unterschiedlichen Temperaturen erfolgen.

10. Verfahren gemäß mindestens einem der Ansprüche 1 bis 9, **dadurch gekennzeichnet, dass** die Polymerisation und das Schäumen zumindest teilweise simultan erfolgen.

11. PMMA-Schaum, **dadurch gekennzeichnet, dass** der Feststoffanteil dieses Schaums zu mindestens 95 Gew% aus einem Polymer, erhältlich aus einer Monomermischung, bestehend aus 70 bis 95 Gew% MMA, 0,1 bis 5 Gew% Alkylacrylaten mit 1 bis 12 C-Atomen im Alkylrest, 0 bis 10 Gew% Alkylmethacrylaten mit 2 bis 12 C-Atomen im Alkylrest, 0,5 bis 10 Gew% Methacrylamiden, N-Alkylmethacrylamiden und/oder N-,N-di-Alkylmethacrylamiden, 0 bis 10 Gew% Vernetzer, 0 bis 10 Gew% Acryl-, Methacryl- und/oder Itaconsäure und 0 bis 10 Gew% eines hydroxyfunktionellen Alkyl(meth)acrylats, und dass der Schaum eine Dichte zwischen 50 und 350 kg/m³ aufweist.

12. PMMA-Schaum gemäß Anspruch 11, **dadurch gekennzeichnet, dass** die PMMA-Schaum eine Dichte zwischen 75 und 250 kg/m³ aufweist.

## Claims

1. Process for producing a polymethacrylate foam, **characterized in that** a composition containing from 0.2 to 2.0% by weight of an initiator, from 0 to 20% by weight of an unpolymerizable blowing agent, from 0 to 5% by weight of a chain-transfer agent and from 70 to 99.8% by weight of a monomer mixture consisting of from 70 to 95% by weight of MMA, from 0.1 to 5% by weight of alkyl acrylates having from 1 to 12 carbon atoms in the alkyl radical, from 0 to 10% by weight of alkyl methacrylates having from 2 to 12 carbon atoms in the alkyl radical, from 0.5 to 10% by weight of methacrylamides, N-alkylmethacrylamides and/or N,N-dialkylmethacrylamides, from 0 to 10% by weight of crosslinkers, from 0 to 10% by weight of acrylic, methacrylic and/or itaconic acid and from 0 to 10% by weight of a hydroxy-functional alkyl (meth)acrylate, where the entire monomer mixture or part of the monomer mixture can be present to an extent of up to 80% by weight as polymer and/or oligomer at the beginning of the polymerization, is polymerized at a temperature in the range from 20°C to 100°C and subsequently foamed at from 130°C to 250°C.

2. Process according to Claim 1, **characterized in that** the polymerization is carried out at a temperature in the range from 30°C to 70°C and foaming is carried out at a temperature in the range from 150°C to 230°C.

3. Process according to at least one of Claims 1 or 2, **characterized in that** the crosslinker is a di(meth)acrylate, tri(meth)acrylate or tetra(meth)acrylate, allyl (meth)acrylate, triallyl cyanurate, triallyl isocyanurate or a mixture containing at least two of these crosslinkers.

4. Process according to at least one of Claims 1 to 3, **characterized in that** the alkyl methacrylates are entirely or partly tert-butyl methacrylate and/or isopropyl methacrylate and/or **in that** the alkyl acrylates are entirely or partly tert-butyl acrylate and/or isopropyl acrylate.

5. Process according to Claim 4, **characterized in that** the monomer mixture contains from 5 to 10% by weight of tert-butyl methacrylate, isopropyl methacrylate, tert-butyl acrylate and/or isopropyl acrylate, where the proportion of tert-butyl acrylate and isopropyl acrylate is at most 5% by weight, and **in that** the composition does not comprise any uncopolymerizable blowing agent.

6. Process according to Claim 1, **characterized in that** the composition contains from 0.5 to 1.5% by weight of the initiator, from 0 to 15% by weight of an unpolymerizable blowing agent, from 0 to 1% by weight of chain-transfer agents and from 75 to 98.49% by weight of the monomer mixture, where the monomer mixture is composed of from 75 to 95% by weight of MMA, from 0.5 to 2.5% by weight of alkyl acrylates having from 1 to 8 carbon atoms in the alkyl radical, from 0 to 5% by weight of alkyl methacrylates having from 2 to 8 carbon atoms in the alkyl radical, from 1 to 8% by weight of methacrylamides, N-alkylmethacrylamides and/or N,N-dialkylmethacrylamides, from 0 to 5% by weight of dimethacrylate or trimethacrylate and from 0 to 8% by weight of acrylic, methacrylic and/or itaconic acid and is present to an extent of from 0 to 50% by weight as polymer and/or oligomer.

7. Process according to at least one of Claims 1 to 6, **characterized in that** the monomer mixture comprises N-alkylmethacrylamides having from 1 to 12 carbon atoms in the alkyl group and no methacrylamide or N,N-dialkylmethacrylamides.

8. Process according to Claim 7, **characterized in that** the N-alkylmethacrylamide is N-methylolmethacrylamide, 2 hydroxypropylmethacrylamide or N-isopropylmethacrylamide.

9. Process according to at least one of Claims 1 to 8, **characterized in that** the polymerization and/or foaming are carried out stepwise at different temperatures.

10. Process according to at least one of Claims 1 to 9, **characterized in that** the polymerization and foaming are carried out at least partly simultaneously.

11. PMMA foam, **characterized in that** the solid part of this foam comprises at least 95% by weight of a polymer produced from a monomer mixture consisting of from 70 to 95% by weight of MMA, from 0.1 to 5% by weight of alkyl acrylates having from 1 to 12 carbon atoms in the alkyl radical, from 0 to 10% by weight of alkyl methacrylates having from 2 to 12 carbon atoms in the alkyl radical, from 0.5 to 10% by weight of methacrylamides, N-alkylmethacrylamides and/or N,N-dialkylmethacrylamides, from 0 to 10% by weight of crosslinkers, from 0 to 10% by weight of acrylic, methacrylic and/or itaconic acid and from 0 to 10% by weight of a hydroxy-functional alkyl (meth)acrylate and **in that** the foam has a density in the range from 50 to 350 kg/m³.

12. PMMA foam according to Claim 11, **characterized in that** the PMMA foam has a density in the range from 75 to 250 kg/m³.

## Revendications

1. Procédé de fabrication d'une mousse de polyméthacrylate, **caractérisé en ce qu'**une composition, contenant 0,2 à 2,0 % en poids d'un initiateur, 0 à 20 % en poids d'un agent gonflant non polymérisable, 0 à 5 % en poids d'un régulateur et 70 à 99,8 % en poids d'un mélange de monomères, constitué par 70 à 95 % en poids de MMA, 0,1 à 5 % en poids d'acrylates d'alkyle contenant 1 à 12 atomes C dans le radical alkyle, 0 à 10 % en poids de méthacrylates d'alkyle contenant 2 à 12 atomes C dans le radical alkyle, 0,5 à 10 % en poids de méthacrylamides, N-alkylméthacrylamides et/ou N-,N-di-alkylméthacrylamides, 0 à 10 % en poids d'agent de réticulation, 0 à 10 % en poids d'acide acrylique, méthacrylique et/ou itaconique, et 0 à 10 % en poids d'un (méth)acrylate d'alkyle hydroxy-fonctionnel, la totalité ou une partie du mélange de monomères pouvant se présenter au début de la polymérisation à hauteur de jusqu'à 80 % en poids sous la forme de polymère et/ou d'oligomère, est polymérisée à une température comprise entre 20 °C et 100 °C, puis moussée entre 130 °C et 250 °C.

2. Procédé selon la revendication 1, **caractérisé en ce que** la polymérisation a lieu à une température comprise entre 30 °C et 70 °C et le moussage a lieu à une température comprise entre 150 °C et 230 °C.

3. Procédé selon au moins l'une quelconque des revendications 1 ou 2, **caractérisé en ce que** l'agent de réticulation consiste en un di-, tri- ou tétra-(méth)acrylate, en du (méth)acrylate d'allyle, en du cyanurate de triallyle, en de l'isocyanurate de triallyle ou en un mélange contenant au moins deux de ces agents de réticulation.

4. Procédé selon au moins l'une quelconque des revendications 1 à 3, **caractérisé en ce que** les méthacrylates d'alkyle consistent en totalité ou en partie en du méthacrylate de tert-butyle et/ou du méthacrylate d'iso-propyle, et/ou **en ce que** les acrylates d'alkyle consistent en totalité ou en partie en de l'acrylate de tert-butyle et/ou de l'acrylate d'iso-propyle.

5. Procédé selon la revendication 4, **caractérisé en ce que** le mélange de monomères contient entre 5 et 10 % en poids de méthacrylate de tert-butyle, de méthacrylate d'iso-propyle, d'acrylate de tert-butyle et/ou d'acrylate d'iso-propyle, la proportion d'acrylate de tert-butyle et d'acrylate d'iso-propyle étant d'au plus 5 % en poids, et **en ce que** la composition ne comprend pas d'agent gonflant non copolymérisable.

6. Procédé selon la revendication 1, **caractérisé en ce que** la composition contient 0,5 à 1,5 % en poids de l'initiateur, 0 à 15 % en poids d'un agent gonflant non polymérisable, 0 à 1 % en poids de régulateur et 75 à 98,49 % en poids du mélange de monomères, le mélange de monomères étant composé par 75 à 95 % en poids de MMA, 0,5 à 2,5 % en poids d'acrylates d'alkyle contenant 1 à 8 atomes C dans le radical alkyle, 0 à 5 % en poids de méthacrylates d'alkyle contenant 2 à 8 atomes C dans le radical alkyle, 1 à 8 % en poids de méthacrylamides, N-alkylméthacrylamides et/ou N-,N-di-alkylméthacrylamides, 0 à 5 % en poids de di- ou tri-méthacrylate, et 0 à 8 % en poids d'acide acrylique, méthacrylique et/ou itaconique, et se présente à hauteur de 0 à 50 % en poids sous la forme de polymère et/ou d'oligomère.

7. Procédé selon au moins l'une quelconque des revendications 1 à 6, **caractérisé en ce que** le mélange de monomères comprend des N-alkylméthacrylamides contenant un à 12 atomes de carbone dans le groupe alkyle et ne comprend pas de méthacrylamide ou de N-,N-di-alkylméthacrylamides.

8. Procédé selon la revendication 7, **caractérisé en ce que** le N-alkylméthacrylamide consiste en le N-méthylolméthacrylamide, le 2-hydroxypropylméthacrylamide ou le N-isopropylméthacrylamide.

9. Procédé selon au moins l'une quelconque des revendications 1 à 8, **caractérisé en ce que** la polymérisation et/ou le moussage ont lieu graduellement à différentes températures.

10. Procédé selon au moins l'une quelconque des revendications 1 à 9, **caractérisé en ce que** la polymérisation et le moussage ont lieu au moins partiellement simultanément.

11. Mousse de PMMA, **caractérisée en ce que** la teneur en solides de cette mousse est constituée à hauteur d'au moins 95 % en poids par un polymère, pouvant être obtenu à partir d'un mélange de monomères, constitué par 70 à 95 % en poids de MMA, 0,1 à 5 % en poids d'acrylates d'alkyle contenant 1 à 12 atomes C dans le radical alkyle, 0 à 10 % en poids de méthacrylates d'alkyle contenant 2 à 12 atomes C dans le radical alkyle, 0,5 à 10 % en poids de méthacrylamides, N-alkylméthacrylamides et/ou N-,N-di-alkylméthacrylamides, 0 à 10 % en poids d'agent de réticulation, 0 à 10 % en poids d'acide acrylique, méthacrylique et/ou itaconique et 0 à 10 % en poids d'un (méth)acrylate d'alkyle hydroxy-fonctionnel, et **en ce que** la mousse présente une densité comprise entre 50 et 350 kg/m³.

12. Mousse de PMMA selon la revendication 11, **caractérisée en ce que** la mousse de PMMA présente une densité comprise entre 75 et 250 kg/m³.
